# EUROPÄISCHE PATENTSCHRIFT

(11) **EP 0 657 023 B1**
(45) Veröffentlichungstag und Bekanntmachung des Hinweises auf die Patenterteilung: **26.06.1996**
(21) Anmeldenummer: 93918883.5
(22) Anmeldetag: 16.08.1993
(51) Int. Cl.: G01K 5/22, C10M 103/04

(54) **FIEBERTHERMOMETER**
CLINICAL THERMOMETER
THERMOMETRE MEDICAL

(30) Priorität: 19.08.1992 DE 4227434
(43) Veröffentlichungstag der Anmeldung: 14.06.1995
(73) Patentinhaber: GERABERGER THERMOMETERWERK GmbH, D-98716 Geraberg (DE)
(72) Erfinder: SPECKBROCK, Gerd, D-98693 Ilmenau (DE); KAMITZ, Siegbert, D-98716 Elgersburg (DE); ALT, Marion, D-99330 Frankenhain (DE); SCHMITT, Heribert, D-98716 Geschwenda (DE)
(74) Vertreter: Schupfner, Gerhard D.
(86) Internationale Anmeldenummer: DE9300736
(87) Internationale Veröffentlichungsnummer: WO9404895

(56) Entgegenhaltungen:
- DE-A- 3 304 022
- DE-B- 1 144 506
- FR-A- 2 586 805
- GB-A- 246 843
- US-A- 4 076 637
- GIT FACHZEITSCHRIFT FUR DAS LABORATORIUM Bd. 16, Nr. 9 , September 1972 , DARMSTADT DE Seiten 1033 - 1040 E. GREIL 'GLASTHERMOMETER, "LUFTLEER" ODER "DRUCKGEFULLT"?'

## Beschreibung

Die Erfindung bezieht sich auf ein Fieberthermometer mit Maxima-Funktion sowie auf ein hierfür geeignetes Eutektikum.

Zur Erzielung der Maxima-Funktion sind herkömmliche Thermometer dieser Art mit Quecksilber gefüllt und weisen zwischen dem Gefäß, das der zu messenden Temperatur ausgesetzt ist, und der Anzeige- oder Meßkapillare eine Verengung auf, die bewirkt, daß beim Abkühlen der in die Meßkapillare eingetretene Quecksilberfaden abreißt.

Quecksilber ist hoch-giftig und stößt daher aus gesundheitlichen und Umweltgründen zunehmend auf Ablehnung.

Ferner erfordert die Herstellung der Verengung bei der Thermometerherstellung einen zusätzlichen Arbeitsschritt, der mit einem gewissen Maß an Genauigkeit auszuführen ist, um den für die Abtrennung des Quecksilberfadens nötigen kleinen, aher im Hinblick auf das Zurückschleudern nicht zu engen Innenquerschnitt zu erreichen.

Gemäß US-PS 3,872,729 ist vorgeschlagen worden, auf die problematische Verengung zu verzichten und die Innenseite der Meßkapillare mit einem Überzug zu versehen, der für die nötigen Adhäsionskräfte sorgt. Die Herstellung einer solchen Meßkapillare ist jedoch sehr aufwendig und in der Regel nicht praktikabel. Darüber hinaus bleibt man bei diesem Thermometer auch auf das giftige Quecksilber angewiesen.

Alle bislang unternommenen Versuche, Hg-freie Fieberthermometer herzustellen, scheiterten zunächst an der notwendigen Maxima-Funktion. Entsprechend ungeeignet sind auch die Thermometer gemäß DE-PS 454 213 und GB-PS 246 843, die eine Verwendung von Gallium mit und ohne Indium vorsehen. Solche Thermometer besitzen auch den Nachteil, daß ihre Meßflüssigkeit bei niedrigen Temparaturen erstarrt, wodurch die Thermometer unter Umständen zerspringen können.

Ähnliche Probleme ergeben sich auch bei der Verwendung einer Meßflüssigkeit, wie sie gemäß SU-PS 279 108 vorgesehen ist.

Die Aufgabe der vorliegenden Erfindung ist es daher, ein Fieberthermometer mit Maxima-Funktion anzugeben, das in seiner Handhabung und Herstellung einfach und vom Gesundheits- und Umweltstandpunkt unbedenklich ist.

Erfindungsgemäß erfolgt die Lösung der gestellten Aufgabe dadurch, daß die eingesetzte Flüssigkeit eine eutektische Legierung ist, die Gallium in einer Konzentration von 65 - 95 Gew.-%, Indium in einer Konzentration von 5 - 22 Gew.-% und gegebenenfalls Zinn in einer Konzentration von 0 - 11 Gew.-% enthält.

Die Verwendung einer eutektischen Galliumlegierung als Meßflüssigkeit ist wegen ihrer ungiftigen Eigenschaft von besonderer Bedeutung. Ferner weist diese Flüssigkeit einen niedrigen Schmelzpunkt und einen hohen Verdampfungspunkt auf, so daß die an ein Fieberthermometer gestellten Anforderungen erfüllt werden.

In diesem Zusammensetzungsbereich erstreckt sich der flüssige Aggregatzustand der Flüssigkeit unter Normalbedingungen von etwa -15 bis über +1800 °C. Gallium, Indium und gegebenenfalls Zinn stellen bevorzugte Legierungselemente dar, weil sie zu einem besonders niedrigen eutektischen Punkt führen. Ferner ist diese Legierung elektrisch leitfähig, so daß sie sich auch zur Ausbildung eines Kontaktthermometers eignet.

In der Weiterbildung der Erfindung nach Anspruch 2 kann die eutektische Legierung bis zu 2 Gew.-% Wismut und bis zu 2 Gew.-% Antimon enthalten. Antimon erhöht die Oxidationsbeständigkeit, während Wismut die Fluidität der Legierung günstig beeinflußt. Ferner stellen Antimon und Wismut ebenso wie Zinn leicht verfügbare und billige Bestandteile dar, während Gallium und Indium teuer sind. Ein Gehalt von über 2 Gew.-% eines der beiden zusätzlichen Elemente Sb und Bi führt dagegen zu einer merklichen und unerwünschten Erhöhung des Schmelzpunktes.

Um die zur Messung und Anzeige verwendete Flüssigkeit in der Stellung der maximalen Benetzung der Meßkapillare festzuhalten, müssen die Adhäsionskräfte gegenüber der Meßkapillare größer sein als die in ihr wirksamen Kohäsionskräfte. Dies wird unter anderem dadurch erreicht, daß die mit der Flüssigkeit in Kontakt tretende Oberfläche der Meßkapillare eine Wasserhaut aufweist. In bevorzugter Weise ist diese Wasserhaut geringer als die permanente Wasserhaut, die normalerweise auf der Kapillaroberfläche aufliegt, so daß eine dünne Galliumoxidschicht gebildet wird, die sich auf der Oberfläche der Meßkapillare ablagert und die Erhöhung der Adhäsionskräfte in der Meßkapillare bewirkt. Insofern kann auch auf die herkömmliche Einschnürung verzichtet werden, was nicht nur die Herstellung, sondern auch die Handhabung beim absichtlichen Rückführen des Meßfadens erleichtert.

Nach einer möglichen Ausführungsform des erfindungsgemäßen Thermometers besteht die Meßkapillare aus Glas. Sie kann einen nicht-kreisförmigen, vorzugsweise flach-ovalen bis sichelförmigen, Querschnitt aufweisen. Diese Merkmale dienen dazu, die Adhäsionskräfte zwischen der Meßflüssigkeit und der Meßkapillare zu erhöhen und damit das zur Erzielung der gewünschten Maxima-Funktion erforderliche Festhalten des Flüssigkeitsfadens in der Meßkapillare bei Temperaturrückgang zu gewährleisten.

Gemäß dem Anspruch 5 ist die eigentliche Meßkapillare mit dem Gefäß über einen Bereich verbunden, dessen Öffnungsquerschnitt vorzugsweise kreisrund ausgebildet ist, um dort die Adhäsionskräfte zu verringern. Dadurch wird eine hohe Funktionssicherheit der Maxima-Funktion erreicht.

Thermometer mit einer Meßkapillare, die einen flachen oder sichelförmigen Querschnitt haben, sind an sich bekannt. Diese Querschnittsform wurde jedoch bisher zur Verbreiterung und besseren Sichtbarmachung des Quecksilberfadens, nicht dagegen zur Erhöhung der Adhäsion angewandt.

Um die Griffigkeit des Fieberthermometers zu erhöhen, kann gemäß Anspruch 6 und 7 an der Außenwand des Fieberthermometers, z.B. an einem die Meßkapillare umgebenden Glasgehäuse, ein Griffelement vorgesehen sein, das von mehreren auf das Gehäuse aufgeschmolzenen Glasmassebereichen gebildet ist. Vorzugsweise sind diese aufgeschmolzenen Glasmassebereiche in einem oder mehreren um das Gehäuse laufenden Ringen angeordnet. Bei Verwendung von farbiger Glasmasse oder Glasfarbe läßt sich ferner eine Kennzeichnungsfunktion z.B. des Meßbereichs oder auch als Hinweis darauf erzielen, daß es sich bei dem Fieberthermometer um ein solches mit ungiftiger Füllung handelt.

Überraschenderweise wurde gefunden, daß ein bevorzugtes Eutektikum, das 68 - 69 Gew.-% Gallium, 21 - 22 Gew.-% Indium und 9,5 - 10,5 Gew.-% Zinn enthält, aufgrund seiner besonderen Eigenschaften noch für viele andere Zwecke einsetzbar ist. Ein solches Eutektikum eignet sich beispielsweise als Gleit- oder Schmiermittel insbesondere im Vakuum-, Hochvakuum- oder Ultrahochvakuumbereich.

Das erfindungsgemäße Eutektikum sollte nach Möglichkeit nur einen geringen Anteil an Verunreinigungen wie z.B. an Blei oder Zink aufweisen, der kleiner als 0,001 Gew.-%, vorzugsweise kleiner als 0,0001 Gew.-% ist.

Dieses neue Eutektikum zeichnet sich vor allem durch seinen niedrigen Schmelzpunkt aus, der unter Normaldruck und normaler Atmosphäre bei -19,5 °C liegt. Darüber hinaus liegt der Verdampfungspunkt bei über 1800 °C.

Ein Ausführungsbeispiel des erfindungsgemäßen Fieberthermometers ist in der Zeichnung dargestellt, in der
Fig. 1 eine Vorderansicht und
Fig. 2 einen Querschnitt längs der Linie II-II in Fig. 1
zeigt.

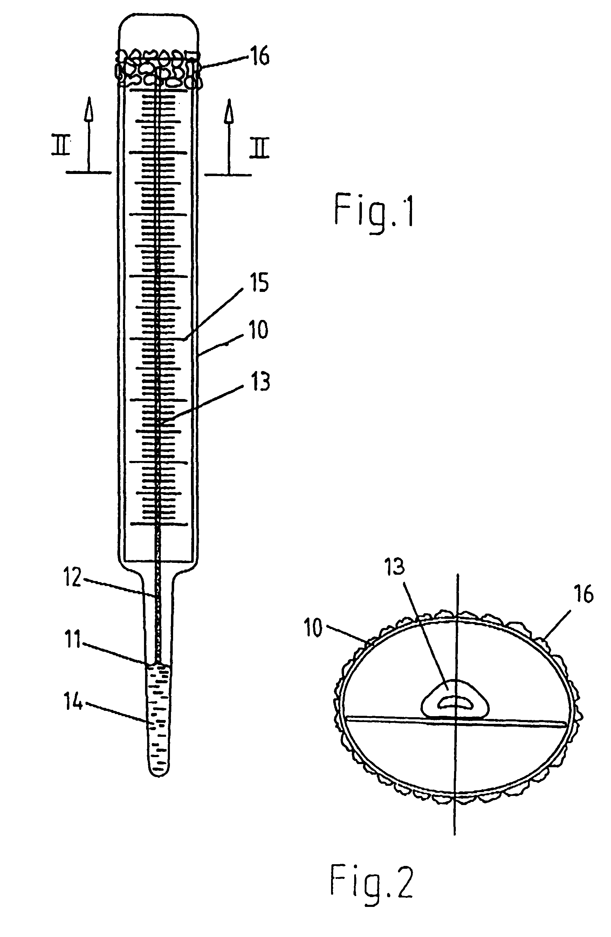

Gemäß der Zeichnung ist in einem Glasgehäuse 10 ein Gefäß 11 mit einer über einen Zwischenbereich 12 daran angesetzten Meßkapillare 13 angeordnet. Das Gefäß 11 ist mit der oben beschriebenen eutektischen Galliumlegierung 14 gefüllt, die gemäß der Darstellung in Fig. 1 infolge Temperaturerhöhung in der Meßkapillare 13 auf eine bestimmte Höhe angestiegen ist. Im Bereich der Meßkapillare ist das Gehäuse mit einer Meßskala 15 versehen.

Die Meßkapillare 13 hat, wie in Fig. 2 gezeigt, eine ovale bis etwa sichelförmige Querschnittsform, um die Adhäsion zwischen der Flüssigkeit 14 und der Meßkapillare 13 zu erhöhen. Demgegenüber ist der Zwischenbereich 12 vorzugsweise mit kreisrundem Öffnungsquerschnitt ausgebildet, um die Adhäsionskräfte in diesem Bereich zu verringern und dadurch die gewünschte Maxima-Funktion sicherzustellen.

In der Nähe des von dem Gefäß 11 abgewandten Endes sind auf die Außenseite des Gehäuses 10 kleine, unregelmäßige Glasmassebereiche 16 aufgeschmolzen, die einen das Gehäuse 10 umgebenden Ring bilden. Dieser Ring erhöht nicht nur die Griffigkeit des Gehäuses 10 in diesem Bereich, sondern kann auch als Farbcodierung dienen.

## Patentansprüche

1. Fieberthermometer mit Maxima-Funktion mit einem eine Flüssigkeit (14) enthaltenden Gefäß (11) und einer daran ansetzenden Meßkapillare (13), dadurch gekennzeichnet, daß die Flüssigkeit (14) eine eutektische Legierung ist, die Gallium in einer Konzentration von 65 - 95 Gew.-%, Indium in einer Konzentration von 5 - 22 Gew.-% und gegebenenfalls Zinn in einer Konzentration von 0 - 11 Gew.-% enthält.

2. Fieberthermometer nach Anspruch 1, dadurch gekennzeichnet, daß die Legierung bis zu 2 Gew.-% Wismut und bis zu 2 Gew.-% Antimon enthält.

3. Fieberthermometer nach Anspruch 1 oder 2, dadurch gekennzeichnet, daß die mit der Flüssigkeit (14) in Kontakt tretende Oberfläche der Meßkapillare (13) eine Wasserhaut aufweist, die die Ausbildung einer dünnen Galliumoxidschicht bewirkt.

4. Fieberthermometer nach Anspruch 3, dadurch gekennzeichnet, daß die Wasserhaut geringer ist als die permanente Wasserhaut.

5. Fieberthermometer nach einem der Ansprüche 1 bis 4, dadurch gekennzeichnet, daß die Meßkapillare (13) einen nicht-kreisförmigen, vorzugsweise einen flach-ovalen oder sichelförmigen Querschnitt aufweist, und mit dem Gefäß (11) über einen Bereich (12) mit kreisförmigen Querschnitt verbunden ist.

6. Fieberthermometer nach einem der Ansprüche 1 bis 5, gekennzeichnet durch ein die Meßkapillare (13) umgebendes Glasgehäuse (10) mit einem Griffelement, das von mehreren auf das Glasgehäuse (10) aufgeschmolzenen Glasmassebereichen (16) gebildet ist.

7. Fieberthermometer nach Anspruch 6, dadurch gekennzeichnet, daß die aufgeschmolzenen Glasmassebereiche (16) in mindestens einem das Gehäuse (10) umgebenden Ring angeordnet sind.

8. Eutektikum, das 68 - 69 Gew.-% Gallium, 21 - 22 Gew.-% Indium und 9,5 - 10,5 Gew.-% Zinn enthält.

9. Eutektikum nach Anspruch 8, dadurch gekennzeichnet, daß der Anteil an Verunreinigungen, beispielsweise durch Blei oder Zink, kleiner als 0,001 Gew.-%, vorzugsweise kleiner als 0,0001 Gew.-% ist.

10. Verwendung des Eutektikums nach Anspruch 8 oder 9 als Gleit- oder Schmiermittel insbesondere im Vakuum-, Hochvakuum- oder Ultrahochvakuumbereich.

## Claims

1. Clinical thermometer which registers the maximum temperature reached with a bulb (11) and a measuring tube (13) containing a liquid (14), characterized in that the liquid (14) is a eutectic alloy containing gallium in a concentration of 65 - 95 wt.-%, indium in a concentration of 5 - 22 wt.-% and tin in a concentration of 0 - 11 wt.-%.

2. Clinical thermometer according to claim 1, characterized in that the alloy contains up to 2 wt.-% bismuth and up to 2 wt.-% antimony.

3. Clinical thermometer according to claims 1 or 2, characterized in that the surface of the measuring tube (13) in contact with the liquid (14) has a water coat, forming a thin gallium oxide layer.

4. Clinical thermometer according to claim 3, characterized in that the water coat is smaller than the permanent water coat.

5. Clinical thermometer according to one of the claims 1 to 4, characterized in that the measuring tube (13) has a non-circular preferably flat-oval or crescent-shaped cross-section and is connected to the bulb (11) via an area (12) with a circular cross-section.

6. Clinical thermometer according to one of the claims 1 to 5, characterized in that the measuring tube (13) is enclosed in a glass housing (10) provided with a grip element which is formed by several glass mass areas (16) melted onto the glass housing (10).

7. Clinical thermometer according to claim 6, characterized in that the melted-on glass mass areas (16) are arranged in the form of at least one ring around the housing (10).

8. Eutectic mixture containing 68 - 69 wt.-% gallium, 21 - 22 wt.-% indium and 9.5 - 10.5 wt.-% tin.

9. Eutectic mixture according to claim 8, characterized in that the degree of impurity, e.g. lead or zinc, is smaller than 0.001 wt.-% , preferably smaller than 0.0001 wt.-%.

10. Use of the eutectic mixture according to claims 8 or 9 as a lubricant especially for vacuum, high-vacuum or ultrahigh vacuum applications.

## Revendications

1. Thermomètre médical, doté de la fonction maxima comprenant un récipient (11), qui contient un liquide (14), et un tube capillaire de mesure (13) placé au-dessus, caractérisé en ce que le liquide (14) est un alliage eutectique qui contient du gallium en concentration de 65 - 95 % en poids, de l'indium en concentration de 5 - 22 % en poids et éventuellement du zinc en concentration de 0 -11 % en poids.

2. Thermomètre médical selon la revendication 1, caractérisé en ce que l'alliage comprend jusqu'à 2 % de bismuth en poids et 2 % d'antimoine en poids.

3. Thermomètre médical selon la revendication 1 ou 2, caractérisé en ce que la surface du tube capillaire de mesure (13), qui entre en contact avec le liquide (14), présente une pellicule d'eau qui provoque la formation d'une fine couche d'oxyde de gallium.

4. Thermomètre médical selon la revendication 3, caractérisé en ce que la pellicule d'eau est plus faible que la pellicule d'eau permanente.

5. Thermomètre médical selon l'une des revendications 1 à 4, caractérisé en ce que le tube capillaire de mesure (13) présente une coupe transversale qui n'a pas la forme d'un cercle, de préférence, a la forme d'un ovale plat ou d'une faucille, et est relié au récipient (11) par une zone (12) de coupe transversale circulaire.

6. Thermomètre médical selon l'une des revendications 1 à 5, caractérisé par une enveloppe en verre (10), qui englobe le tube capillaire de mesure (13), qui est muni d'un élément formant poignée (16) constitué par plusieurs zones de masse de verre fondues sur l'enveloppe en verre (10).

7. Thermomètre médical selon la revendication 6, caractérisé en ce que les zones de masse de verre fondues (16) sont disposées dans au moins un anneau entourant l'enveloppe (10).

8. Système eutectique qui contient 68 - 69 % de gallium en poids, 21 - 22 % d'indium en poids et 9,5 - 10,5 % d'étain en poids.

9. Système eutectique selon la revendication 8, caractérisé en ce que la teneur en impuretés, par exemple à base de plomb ou de zinc, est inférieure à 0,001, de préférence 0,0001 % en poids.

10. Utilisation du système eutectique selon la revendication 8 ou 9 en tant que lubrifiant en particulier dans la zone du vide, du vide poussé ou de l'ultravide.
